# FASCICULE DE BREVET EUROPEEN

(11) **EP 0 714 484 B1**
(45) Date de publication et mention de la délivrance du brevet: **06.10.1999**
(21) Numéro de dépôt: 95920149.2
(22) Date de dépôt: 17.05.1995
(51) Int. Cl.: F16F 1/38

(54) **SUPPORT ELASTIQUE COMPORTANT AU MOINS DEUX MANCHONS CYLINDRIQUES, MANCHONS POUR UN TEL SUPPORT ET PROCEDE DE FABRICATION DU SUPPORT AU MOYEN DESDITS MANCHONS**
ELASTISCHES LAGER MIT MINDESTENS ZWEI ZYLINDRISCHEN BUCHSEN, BUCHSEN FÜR EIN SOLCHES LAGER UND FABRIKATIONSPROZESS DES LAGERS MITTELS DERARTIGEN BUCHSEN
RESILIENT SUPPORT WITH AT LEAST TWO CYLINDRICAL SLEEVES, SLEEVES FOR SAME AND METHOD FOR MANUFACTURING SAID SUPPORT WITH SAID SLEEVES

(30) Priorité: 18.05.1994 FR 9406159
(43) Date de publication de la demande: 05.06.1996
(73) Titulaire: MICHELIN AVS, F-78000 Versailles (FR)
(72) Inventeur: GAUTHERON, Michel, F-58000 Nevers (FR)
(74) Mandataire: Peuscet, Jacques
(86) Numéro de dépôt international: FR9500645
(87) Numéro de publication internationale: WO9531652

(56) Documents cités:
- EP-A- 0 009 120
- EP-A- 0 132 502
- EP-A- 0 499 996
- EP-A- 0 529 629
- DE-C- 4 309 425
- DE-U- 1 659 989
- DE-U- 9 112 268
- FR-A- 680 434
- GB-A- 816 311
- GB-A- 869 368
- US-A- 2 048 256
- US-A- 2 509 145
- US-A- 2 621 923
- PATENT ABSTRACTS OF JAPAN vol. 14 no. 331 (M-999) [4274] ,17 Juillet 1990 & JP,A,02 113137 (BRIDGESTONE CORP) 25 Avril 1990,
- PATENT ABSTRACTS OF JAPAN vol. 10 no. 130 (M-478) [2187] ,14 Mai 1986 & JP,A,60 256637 (KURASHIKI KAKOU KK) 18 Décembre 1985,

## Description

L'invention concerne un support élastique comportant au moins deux manchons cylindriques liés entre eux par un matériau élastique.

Plus précisément, l'invention concerne un support élastique comportant deux manchons cylindriques d'axes parallèles liés entre eux par un matériau élastique en compression, la compression du matériau élastique ayant été obtenue par modification de la longueur de la ligne moyenne de la section droite de l'un au moins desdits manchons dans le sens qui rapproche l'une de l'autre radialement les lignes moyennes des sections droites de deux manchons adjacents ; comme on le sait, en effet, le matériau élastique, généralement du caoutchouc, travaille préférenciellement en compression plutôt qu'en traction, dans sa fonction d'amortisseur de vibrations. Un tel support élastique trouve de nombreuses applications en mécanique, comme par exemple dans la réalisation de biellettes articulées, notamment pour véhicules automobiles, une des biellettes étant associée à un manchon et l'autre à l'autre manchon.

Un support selon le préambule de la revendication 1 est connu du document EP-A-0 529 629.

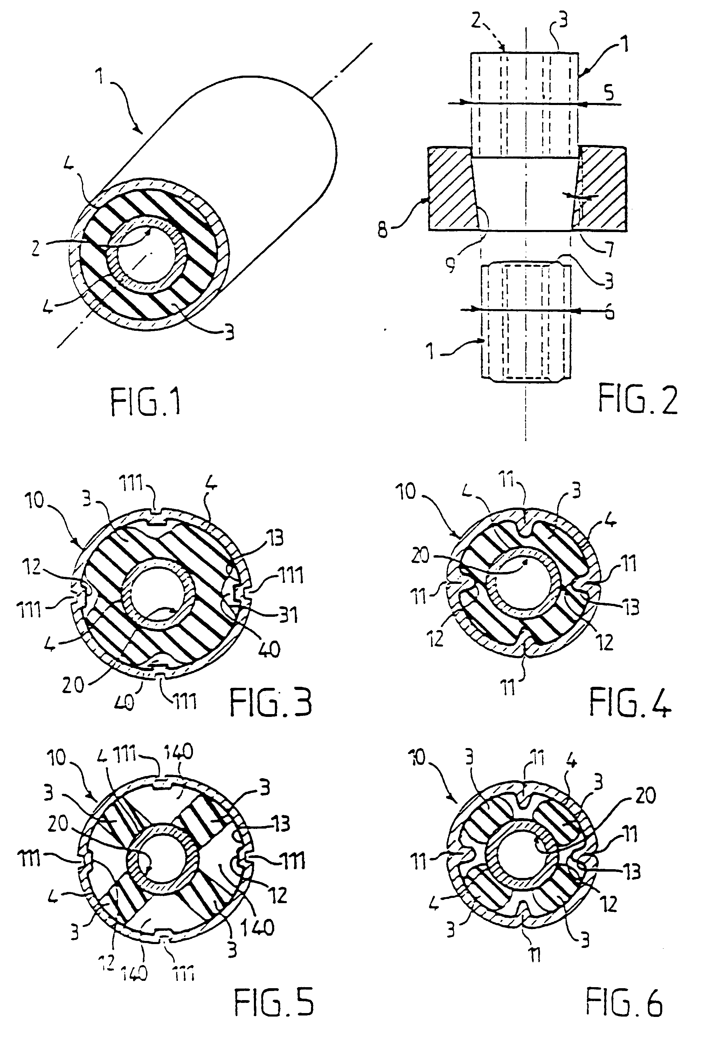

La figure 1 représente, en perspective, un support élastique de ce type, qui comporte un manchon cylindrique externe 1 et un manchon cylindrique interne 2, coaxiaux, métalliques, ici à sections circulaires ; entre les deux manchons 1 et 2 est disposée une matière élastique 3, telle que du caoutchouc, solidarisée par collage 4 à la surface intérieure du manchon externe 1 et à la surface extérieure du manchon interne 2. Pour constituer un tel support élastique, on part de deux manchons 1 et 2, sur lesquels on dépose, par exemple par pulvérisation, une colle 4 dissoute dans un solvant ; après évaporation du solvant et séchage de la colle 4, les deux manchons 1 et 2 sont déposés coaxialement dans une machine à mouler pour la mise en place par moulage du caoutchouc 3 entre les deux manchons 1 et 2 ; les conditions thermiques dans lesquelles est réalisé le moulage du caoutchouc 3 permettent le collage proprement dit par la colle 4 du caoutchouc 3.

Pour réaliser le support élastique, il est nécessaire de mettre le caoutchouc 3 en compression ; cette opération est réalisée mécaniquement en modifiant la longueur de la ligne moyenne de la section droite de l'un au moins desdits manchons, le plus souvent le manchon externe 1, cette modification de ligne moyenne étant dans ce cas une réduction de la longueur de celle-ci. La figure 2 illustre schématiquement la méthode employée la plus courante : le support élastique, réalisé comme décrit ci-dessus, est introduit à force dans l'alésage 9 d'une filière 8 de forme tronconique ; après passage dans la filière 8, le diamètre extérieur 6 du manchon externe 1 est inférieur au diamètre extérieur 5 qu'il avait avant introduction dans la filière, cette réduction de diamètre mettant en compression le caoutchouc 3. Or, il s'avère que cette réduction de diamètre, si elle est importante, est accompagnée d'une déformation anarchique du métal et conduit la plupart du temps à une détérioration du collage ; la seule façon d'éviter cet inconvénient est de limiter la réduction en diamètre du manchon 1. L'angle 7 de l'alésage conique 9 de la filière 8, c'est-à-dire le demi-angle au sommet du cône correspondant, n'excède donc, généralement, pas deux degrés et la réduction en diamètre est, en pratique, limitée à cinq pour cent. Or, le caoutchouc 3, comme on le sait, est le siège d'un phénomène de retrait dû à sa vulcanisation ; la réduction de diamètre doit donc compenser ce retrait avant que l'on puisse assurer la compression du caoutchouc ; on comprend donc que la limitation du rétreint à quelques pourcents conduise à la réalisation d'un support élastique dont l'efficacité est limitée, le caoutchouc 3 étant insuffisamment comprimé. On a également utilisé, à la place de la filière 8, un mandrin de serrage à secteurs longitudinaux espacés circonférentiellement, notamment pour la réalisation de support élastiques à section non circulaire, par exemple polygonale, mais les inconvénients cités ci-dessus sont les mêmes.

La présente invention a pour objet un support élastique dans lequel le matériau élastique est mis en compression selon un degré supérieur à celui qui est connu jusqu'ici, la réduction de diamètre citée à propos de l'exemple ci-dessus pouvant atteindre vingt pour cent au lieu de cinq pour cent, et ce sans détérioration du collage.

Ainsi, l'invention a pour objet un support élastique comportant au moins deux manchons cylindriques d'axes parallèles, l'un externe et l'autre interne, liés entre eux par un matériau élastique en compression, la compression du matériau élastique étant obtenue au moins par modification de la longueur de la ligne moyenne de la section droite dudit manchon externe, qui est déformable et en contact avec ledit matériau, la modification de la longueur de la ligne moyenne de la section droite dudit manchon externe étant obtenue dans le sens qui rapproche l'une de l'autre radialement les lignes moyennes des sections droites du manchon externe et du manchon adjacent, le manchon externe, dont la ligne moyenne est modifiée, présentant des plis rentrés longitudinaux prépositionnés, régulièrement répartis périphériquement, caractérisé par le fait que le matériau élastique n'est collé à la surface intérieure du manchon externe que dans des zones autres que celles qu sont situées au droit desdits plis rentrés et celles qui sont situées au voisinage des zones.

Selon une forme de réalisation du support selon l'invention, la rigidité des plis rentrés du manchon externe est apte à maintenir en compression le matériau élastique ; on peut aussi prévoir que le support selon l'invention comporte un manchon intermédiaire de même axe que les manchons externe et interne, le matériau élastique étant disposé entre, d'une part, le manchon intermédiaire et, d'autre part, chacun des manchons externe et interne, et étant collé sur les surfaces intérieure et extérieure du manchon intermédiaire.

Avantageusement, la ligne moyenne du manchon interne est modifiée pour présenter des plis sortis longitudinaux prépositionnés et régulièrement répartis périphériquement ; la modification de la ligne moyenne du manchon interne crée une compression du matériau élastique disposé entre ledit manchon interne et le manchon intermédiaire. De préférence, le manchon interne présente une augmentation atteignant jusqu'à vingt pour cent de la longueur de la ligne moyenne de sa section droite ; le manchon externe peut aussi présenter une réduction atteignant jusqu'à vingt pour cent de la longueur de la ligne moyenne de sa section droite. Avantageusement, les plis rentrés ont des ailes jointives.

Dans une variante préférée, la section de l'un au moins des manchons est circulaire ou polygonale.

L'invention a également pour objet un procédé de fabrication d'un support élastique tel que ci-dessus défini, comportant au moins un manchon externe et un manchon interne cylindriques d'axe parallèle liés entre eux par un matériau élastique, caractérisé par le fait qu'il consiste à modifier la longueur de la ligne moyenne de la section droite du manchon externe en rapprochant l'une de l'autre radialement les lignes moyennes des sections droites du manchon externe et du manchon adjacent .

De préférence, le procédé ci-dessus défini prévoit, en outre, d'augmenter par dudgeonnage la longueur de la ligne moyenne de la section droite du manchon interne.

Pour mieux faire comprendre l'objet de l'invention, on va en décrire, maintenant, à titre d'exemple purement illustratif et non limitatif, quatre modes de réalisation représentés sur le dessin annexé.

Sur ce dessin :
- la figure 1 représente en perspective un support élastique de l'état de la technique ;
- la figure 2 illustre schématiquement un procédé de réalisation connu du support élastique de la figure 1 ;
- les figures 3 et 4 sont des vues en coupe transversale d'un support élastique selon l'invention respectivement avant, figure 3, et après, figure 4, mise en compression du matériau élastique, cette mise en compression étant obtenue par diminution de la longueur de la ligne moyenne de la section droite du manchon externe ;
- les figures 5 et 6 sont analogues aux figures 3 et 4 et représentent une variante ;
- les figures 7 et 8 sont des vues en coupe transversale d'un support élastique selon l'invention respectivement avant, figure 7, et après, figure 8, mise en compression du matériau élastique, cette mise en compression étant obtenue par augmentation de la longueur de la ligne moyenne de la section droite du manchon interne ;
- la figure 9 est une vue en coupe transversale d'un support élastique selon l'invention comportant un manchon intermédiaire, avant mise en compression du matériau élastique ;
- la figure 10 représente le support élastique de la figure 9 après une première mise en compression du matériau élastique par diminution de la longueur de la ligne moyenne de la section droite du manchon externe ;
- la figure 11 représente le support élastique de la figure 10 après une deuxième mise en compression du matériau élastique par augmentation de la longueur de la ligne moyenne de la section droite du manchon interne.

En se reportant à la figure 3, on voit que pour réaliser un support élastique conforme à la présente invention, on part d'un manchon interne 20 cylindrique métallique, ici de section de forme générale circulaire, dont la surface extérieure est revêtue d'une colle 4 sèche après évaporation du solvant qui a servi au dépôt de ladite colle 4 par pulvérisation. Le manchon interne 20 est entouré de manière concentrique d'un manchon externe 10, cylindrique, métallique, à section circulaire. La paroi du manchon externe 10 comporte des plis longitudinaux rentrants 111, qui sont, en fait, des amorces de plis plus importants, comme cela va être décrit ci-dessous ; ces plis 111, ou amorces de plis, peuvent être réalisés par usinage, matriçage, emboutissage, étirage, filage. La section de la paroi du manchon externe 10 au droit des plis 111 peut être de forme générale quadrandulaire, trapézoïdale, à angles vifs ou arrondis. Les plis 111 sont régulièrement répartis à la périphérie du manchon externe 10 ; selon l'exemple représenté, il y a quatre plis 111 disposés à quatre-vingt dix degrés l'un de l'autre.

Les deux manchons 10 et 20 sont déposés coaxialement dans une machine à mouler pour la mise en place par moulage du caoutchouc 3 entre les deux manchons 10 et 20 : préalablement au moulage, des zones 40 sont réservées, par exemple grâce à des tiroirs coulissants prévus dans la machine à mouler. Ces zones 40 sont situées à l'intérieur du manchon 10 au droit 12 des plis rentrants 111 et à leur voisinage 13, en sorte que, lorsque le caoutchouc 3 est moulé entre les manchons 10 et 20, il n'y a pas de caoutchouc dans ces zones 40, comme le montre la figure 3.

Pour terminer le support élastique, l'ensemble qui vient d'être décrit est introduit à force dans une filière de forme tronconique, telle que la filière 8 de la figure 2, ce qui conduit à une réduction de la longueur de la ligne moyenne de la section droite du manchon 10, c'est-à-dire une réduction du diamètre du manchon 10. Grâce aux plis 111 régulièrement répartis circonférentiellement, que comporte le manchon 10, cette réduction de diamètre s'effectue symétriquement, les plis 111 étant accentués lors de cette opération jusqu'à devenir des plis rentrés 11, dont les ailes sont jointives, comme représenté sur la figure 4, mais pourraient être non jointives. Du fait des zones de réserve 40 prévues lors du moulage du caoutchouc, la zone 31 de surface de celui-ci qui fait face aux parties 12, 13 de la surface intérieure du manchon 10 n'est pas collée au manchon 10 et il n'y a donc pas de détérioration du collage dans ces zones très sollicitées mécaniquement lors de l'opération de réduction de diamètre qui peut être conduite avec un taux de réduction important pouvant atteindre jusqu'à vingt pour cent.

Les figures 5 et 6 sont analogues respectivement aux figures 3 et 4 mais concernent une variante selon laquelle les zones de réserve 140 sont plus importantes, le caoutchouc 3 n'entourant pas complètement le manchon interne 20 : le caoutchouc 3 est en forme d'une pluralité de bras radiaux, ici quatre bras radiaux.

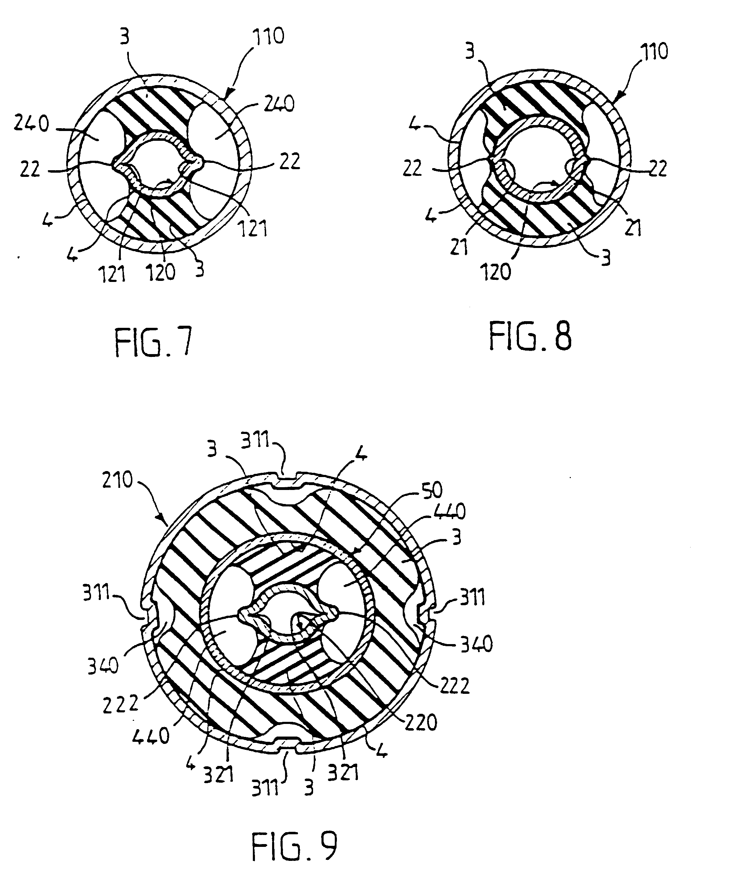

Les figures 7 et 8 représentent une variante de support élastique selon l'invention dans laquelle la mise en compression du caoutchouc 3 est obtenue non pas par une réduction de la longueur de la ligne moyenne de la section droite du manchon externe 110 mais par une augmentation de celle dumanchon interne 120. Pour ce faire, on part d'un manchon interne 120 comportant, figure 7, des plis longitudinaux sortants 121 régulièrement répartis périphériquement ; selon l'exemple représenté, le manchon interne 120 comporte deux plis sortants 121 disposés à cent quatre-vingt degrés. Comme pour les variantes précédentes, un tel manchon interne 120 et un manchon externe 110 cylindrique à section circulaire sont placés coaxialement dans une machine à mouler, des réserves 240 étant prévues : comme on le voit sur la figure 7, ces réserves 240 sont disposées au droit des plis sortants 121 du manchon interne 120. Ainsi, le caoutchouc 3 après moulage adhère par collage sur les zones autres que les zones 22 de la surface extérieure du manchon interne 120 situées au droit des plis sortants 121, une couche de colle 4 ayant été, comme précédemment, préalablement pulvérisée sur les surfaces intérieure du manchon externe 110 et extérieure du manchon interne 120. Les réserves 240 sont telles qu'il n'y a pas de caoutchouc collé dans les zones 22 de la surface extérieure du manchon interne 120. Le manchon interne 120 est ensuite soumis à une opération de dudgeonnage à la suite de laquelle la longueur de la ligne moyenne en section du manchon interne 120 est augmentée, les plis sortants 121 étant ouverts par cette opération en laissant généralement des traces longitudinales 21 dits plis sortis 21. L'augmentation de longueur de ligne moyenne au cours du dudgeonnage peut atteindre jusqu'à vingt pour cent, sans détérioration du collage, la matière du manchon interne 120 n'étant sujette à aucun allongement pendant le dudgeonnage.

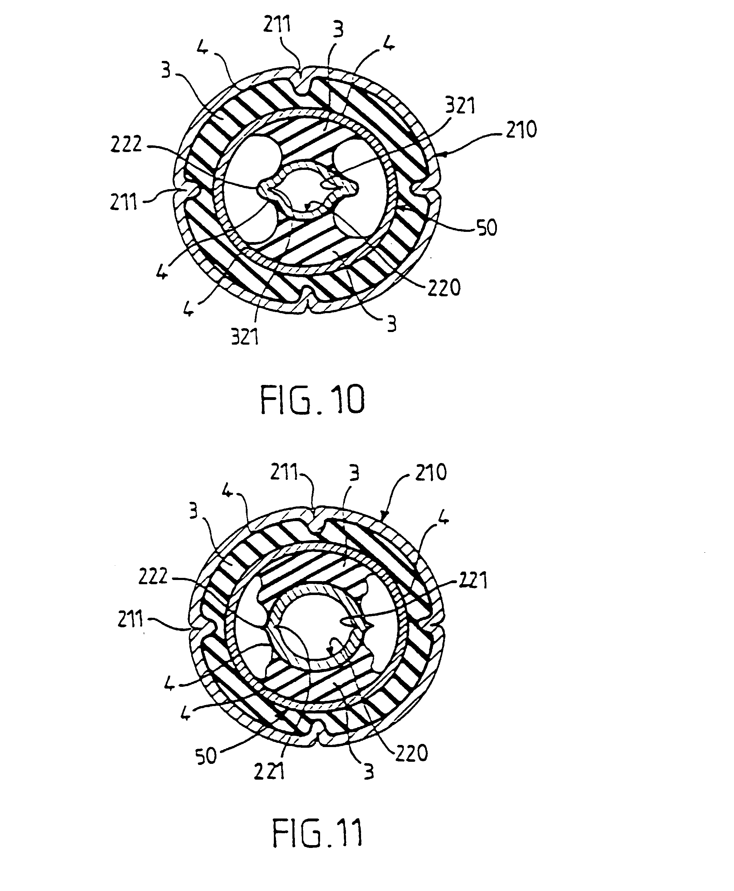

Les figures 9 à 11 concernent une autre variante de support élastique selon l'invention qui comprend, outre des manchons interne 220 et externe 210 analogues à ceux décrits précédemment à propos des figures 3 à 8, un manchon intermédiaire 50 de même axe que les manchons externe 210 et interne 220 et placé entre ceux-ci ; sur ces figures, les éléments des manchons 220 et 210 similaires à ceux des manchons analogues des figures précédentes portent les références qu'ils avaient sur ces figures augmentées de deux cents et ne seront pas décrits davantage ; du caoutchouc 3 est disposé entre, d'une part, le manchon intermédiaire 50 et, d'autre part, chacun des manchons externe 210 et interne 220. Le caoutchouc 3 est collé sur les manchons externe et interne comme dans les variantes précédentes, des réserves telles que 340 et 440 ayant été prévues, et, en outre, sur les surfaces intérieure et extérieure du manchon intermédiaire 50. Selon cette variante, le caoutchouc 3 est mis en compression en réduisant la longueur de la ligne moyenne de la section droite du manchon externe 210 et en augmentant celle du manchon interne 220. La figure 9 représente cette variante de support élastique juste après le moulage du caoutchouc 3, le manchon externe 210 étant analogue au manchon externe 10 décrit à propos de la figure 3 et le manchon interne 220 étant analogue au manchon interne 120 décrit à propos de la figure 7. La figure 10 montre la configuration du support élastique après passage dans une filière du manchon externe 210 et la figure 11 montre la configuration finale du support élastique après dudgeonnage du manchon interne 220 ; bien entendu, ces deux opérations, passage dans une filière et dudgeonnage, peuvent être réalisées successivement ou simultanément.

## Revendications

1. Support élastique comportant au moins deux manchons (10-210, 20-220) cylindriques d'axes parallèles, l'un externe (10, 210) et l'autre interne (20, 220), liés entre eux par un matériau élastique (3) en compression, la compression du matériau élastique (3) étant obtenue au moins par modification de la longueur de la ligne moyenne de la section droite dudit manchon externe, qui est déformable et en contact avec ledit matériau, la modification de la longueur de la ligne moyenne de la section droite dudit manchon externe étant obtenue dans le sens qui rapproche l'une de l'autre radialement les lignes moyennes des sections droites du manchon externe (10, 210) et du manchon adjacent, le manchon externe (10, 210), dont la ligne moyenne est modifiée, présentant des plis rentrés (11, 211) longitudinaux prépositionnés, régulièrement répartis périphériquement, caractérisé par le fait que le matériau élastique (3) n'est collé à la surface intérieure du manchon externe (10, 210) que dans des zones autres que celles (12) qui sont situées au droit desdits plis rentrés (11, 211) et celles (13) qui sont situées au voisinage des zones (12).

2. Support selon la revendication 1, caractérisé par le fait que la rigidité des plis rentrés (11, 211) du manchon externe (10, 210) est apte à maintenir en compression le matériau élastique (3).

3. Support selon l'une des revendications 1 ou 2, caractérisé par le fait qu'il comporte un manchon intermédiaire (50) de même axe que les manchons externe (210) et interne (220), le matériau élastique (3) étant disposé entre, d'une part, le manchon intermédiaire (50) et, d'autre part, chacun des manchons externe (210) et interne (220), et étant collé sur les surfaces intérieure et extérieure du manchon intermédiaire (50).

4. Support selon l'une des revendications 1 à 3, caractérisé par le fait que la ligne moyenne du manchon interne (220) est modifiée pour présenter des plis sortis (222) longitudinaux prépositionnés et régulièrement répartis périphériquement.

5. Support selon les revendications 3 et 4 prises simultanément, caractérisé par le fait que la modification de la ligne moyenne du manchon interne (220) crée une compression du matériau élastique (3) disposé entre ledit manchon interne (220) et le manchon intermédiaire (50).

6. Support selon la revendication 4, caractérisé par le fait que le manchon interne (20, 220) présente une augmentation atteignant jusqu'à vingt pour cent de la longueur de la ligne moyenne de sa section droite.

7. Support selon l'une des revendications 1 à 6, caractérisé par le fait que les plis rentrés (11, 211) ont des ailes jointives.

8. Support selon l'une des revendications 1 à 7, caractérisé par le fait que le manchon externe (10, 210) présente une réduction atteignant jusqu'à vingt pour cent de la longueur de la ligne moyenne de sa section droite.

9. Support selon l'une des revendications 1 à 8, caractérisé par le fait que la section de l'un au moins des manchons (10-210, 50, 20-220) est circulaire ou polygonale.

10. Procédé de fabrication d'un support élastique comportant au moins un manchon externe (10-210) et un manchon interne (20-220) cylindriques d'axe parallèle liés entre eux par un matériau élastique (3) selon l'une des revendications 1 à 9, caractérisé par le fait qu'il consiste à modifier la longueur de la ligne moyenne de la section droite du manchon externe (10, 210) en rapprochant l'une de l'autre radialement les lignes moyennes des sections droites du manchon externe (10-210) et du manchon adjacent (50, 20-220).

11. Procédé selon la revendication 10, caractérisé par le fait qu'il consiste à augmenter, en outre, par dudgeonnage la longueur de la ligne moyenne de la section droite du manchon interne (220).

## Claims

1. Resilient support comprising at least two cylindrical sleeves (10-210, 20-220), having parallel axes, one external (10, 210) and the other internal (20, 220), linked together by an elastic material (3) in compression, the compression of the elastic material (3) being obtained at least by modifying the length of the mid-line of the cross section of the said external sleeve, which is deformable and in contact with the said material, the modification of the length of the mid-line of the cross section of the said external sleeve being obtained in the direction which brings radially closer together the mid-lines of the cross sections of the external sleeve (10, 210) and of the adjacent sleeve, the external sleeve (10, 210) whose mid-line is modified having prepositioned longitudinal pushed-in folds (11, 211) uniformly distributed on the periphery, characterized by the fact that the elastic material (3) is adhesively bonded to the internal surface of the outer sleeve (10, 210) only in regions other than those (12) which are located in line with the said pushed-in folds (11, 211) and those (13) which are located in the vicinity of the regions (12).

2. Support according to Claim 1, characterized by the fact that the stiffness of the pushed-in folds (11, 211) of the external sleeve (10, 210) is capable of maintaining the elastic material (3) in compression.

3. Support according to either of Claims 1 and 2, characterized by the fact that it comprises an intermediate sleeve (50) having the same axis as the external (210) and internal (220) sleeves, the elastic material (3) being placed between, on the one hand, the intermediate sleeve (50) and, on the other hand, each of the external (210) and internal (220) sleeves and being adhesively bonded to the inner and outer surfaces of the intermediate sleeve (50).

4. Support according to one of Claims 1 to 3, characterized by the fact that the mid-line of the internal sleeve (220) is modified in order to have prepositioned longitudinal pushed-out folds (222) uniformly distributed on the periphery.

5. Support according to Claims 3 and 4 taken together, characterized by the fact that the modification of the mid-line of the internal sleeve (220) compresses the elastic material (3) placed between the said internal sleeve (220) and the intermediate sleeve (50).

6. Support according to Claim 4, characterized by the fact that the internal sleeve (20, 220) has an increase amounting to as much as twenty per cent of the length of the mid-line of its cross section.

7. Support according to one of Claims 1 to 6, characterized by the fact that the pushed-in folds (11, 211) have touching sides.

8. Support according to one of Claims 1 to 7, characterized by the fact that the external sleeve (10, 210) has a reduction amounting to as much as twenty per cent of the length of the mid-line of its cross section.

9. Support according to one of Claims 1 to 8, characterized by the fact that the cross section of at least one of the sleeves (10-210, 50, 20-220) is circular or polygonal.

10. Process for manufacturing a resilient support comprising at least one cylindrical external sleeve (10-210) and one cylindrical internal sleeve (20-220), having parallel axes, linked together by an elastic material (3) according to one of Claims 1 to 9, characterized by the fact that it consists in modifying the length of the mid-line of the cross section of the external sleeve (10, 210) by bringing radially closer together the mid-lines of the cross sections of the external sleeve (10-210) and of the adjacent sleeve (50, 20-220).

11. Process according to Claim 10, characterized by the fact that it consists in furthermore increasing, by a tube-expansion operation, the length of the mid-line of the cross section of the internal sleeve (220).

## Patentansprüche

1. Elastisches Lager mit wenigstens zwei achsparallelen, zylindrischen Buchsen (10-210,20-220), nämlich einer äußeren (10,210) und einer inneren (20,220), die durch ein komprimiertes elastisches Material (3) miteinander verbunden sind, wobei die Kompression des elastischen Materials (3) wenigstens durch Veränderung der Länge der Mittellinie des Querschnitts der Außenbuchse erzeugt wurde, die verformbar ist und sich in Kontakt mit dem Material befindet, wobei die Veränderung der Länge der Mittellinie des Querschnitts der Außenbuchse in der Richtung bewirkt wurde, welche die Mittellinien der Querschnitte der Außenbuchse (10,210) und der benachbarten Buchse einander annähert, wobei die Außenbuchse (10,210), deren Mittellinie verändert ist, eingestülpte Längsfalten (11,211) aufweist, die gleichmaßig über den Umfang verteilt angeordnet sind, dadurch gekennzeichnet, daß das elastische Material (3) nur in anderen Bereichen als denen (12), die sich auf Höhe der eingestülpten Falten (11,211) und denen (13), die sich in der Nähe der Bereiche (12) befinden, mit der Innenfläche der Außenbuchse (10,210) verklebt ist.

2. Lager gemäß Anspruch 1, dadurch gekennzeichnet, daß die Steifigkeit der eingestülpten Falten (11,211) der Außenbuchse (10,210) so gewählt ist, daß das elastische Material (3) unter Kompression gehalten wird.

3. Lager gemäß einem der Ansprüche 1 oder 2, dadurch gekennzeichnet, daß es eine Zwischenbuchse (50) mit gleicher Achse wie die Außenbuchse (210) und die Innenbuchse (220) aufweist, wobei das elastische Material (3) zwischen einerseits der Zwischenbuchse (50) und andererseits jeweils der Außenbuchse (210) bzw. der Innenbuchse (220) angeordnet und mit der Innenfläche bzw. der Außenflächen der Zwischenbuchse (50) verklebt ist.

4. Lager gemäß einem der Ansprüche 1 bis 3, dadurch gekennzeichnet, daß die Mittellinie der Innenbuchse (220) so verändert ist, daß sie Längsausstülpungen (222) aufweist, die gleichmäßig über den Umfang verteilt angeordnet sind.

5. Lager gemäß den Ansprüchen 3 und 4 zusammengenommen, dadurch gekennzeichnet, daß die Veränderung der Mittellinie der Innenbuchse (220) eine Kompression des zwischen der Innenbuchse (220) und der Zwischenbuchse (50) angeordneten elastischen Materials erzeugt.

6. Lager gemäß Anspruch 4, dadurch gekennzeichnet, daß die Innenbuchse (20,220) eine Verstärkung aufweist, die bis zu 20% der Länge der Mittellinie ihres Querschnitts beträgt.

7. Lager gemäß einem der Ansprüche 1 bis 6, dadurch gekennzeichnet, daß die eingestülpten Falten (11,211) aneinanderstoßende Flügel sind.

8. Lager gemäß einem der Ansprüche 1 bis 7, dadurch gekennzeichnet, daß die Außenbuchse (10,210) eine Reduzierung aufweist, die bis zu 20% der Länge der Mittellinie ihres Querschnitts beträgt.

9. Lager gemäß einem der Ansprüche 1 bis 8, dadurch gekennzeichnet, daß der Querschnitt von wenigstens einer der Buchsen (10-210,50,20-220) kreisförmig oder polygonal ist.

10. Verfahren zur Herstellung eines elastischen Lagers mit wenigstens einer zylindrischen Außenbuchse (10-210) und einer achsparalellen zylindrischen Innenbuchse (20-220), die durch ein elastisches Material (3) miteinander verbunden sind, nach einem der Ansprüche 1 bis 9, dadurch gekennzeichnet, daß es aus dem Verändern der Länge der Mittellinie des Querschnitts der Außenhülse (10,210) durch radiales Annähern der Mittellinien der Querschnitte der Außenbuchse (10-210) und der benachbarten Buchse (50,20-220) besteht.

11. Verfahren gemäß Anspruch 10, dadurch gekennzeichnet, daß es außerdem aus dem Vergrößern der Länge der Mittellinie des Querschnitts der Innenbuchse (220) durch Einwalzen besteht.
